# EUROPÄISCHE PATENTANMELDUNG

(11) **EP 4 137 339 A1**
(43) Veröffentlichungstag der Anmeldung: **22.02.2023**
(21) Anmeldenummer: 22186440.8
(22) Anmeldetag: 22.07.2022
(51) Int. Cl.: B60H 1/32

(54) **WASSERABLAUFANORDNUNG FÜR EIN FAHRZEUG**

(30) Priorität: 19.08.2021 DE 102021121525
(71) Anmelder: Audi AG, 85045 Ingolstadt (DE)
(72) Erfinder: RESTLE, Tanja, 74321 Bietigheim-Bissingen (DE); SEITZ, Robert, 85072 Eichstätt (DE); STÖCKLEIN, Andreas, 85092 Kösching (DE)

(57) **Zusammenfassung**

Die Erfindung betrifft eine Wasserablaufanordnung (10) für ein Fahrzeug, insbesondere für Kondenswasser eines Fahrzeugaggregats (1), mit einem Ablaufkanal (12), einer rohrförmigen Durchführvorrichtung (20), welche durch zwei in gegenüberliegende Wandbleche (5.1, 5.3) eingebrachte Rohbauöffnungen (5.2, 5.4) eines Hohlprofils (5) einer Fahrzeugkarosserie geführt ist, und einer rohbaufesten Hülse (16), welche eine erste der beiden Rohbauöffnungen (5.2, 5.4) des Hohlprofils (5) durchgreift und fluiddicht mit dem Hohlprofil (5) verbunden ist, wobei die Durchführvorrichtung (20) fluiddicht in die rohbaufeste Hülse (16) eingeführt ist und diese mit einem Ablauf (28) durchgreift, welcher an einem eingeführten Ende der Durchführvorrichtung (20) angeordnet ist, wobei der Ablaufkanal (12) mit seinem freien Ende fluiddicht in eine Aufnahme (22) der Durchführvorrichtung (20) eingeführt und gehalten ist, welche an einem dem Ablauf (28) gegenüberliegenden Ende der Durchführvorrichtung (20) angeordnet ist.

## Beschreibung

Die Erfindung betrifft eine Wasserablaufanordnung für ein Fahrzeug, insbesondere für Kondenswasser eines Fahrzeugaggregats.

Wasserablaufanordnungen für Fahrzeuge, insbesondere für Kondenswasser eines Fahrzeugaggregats, wie beispielsweise einer Klimaanlage sind in zahlreichen Variationen bekannt. Klimaanlagen werden in Fahrzeugen eingesetzt, um einen Fahrzeuginnenraum zu temperieren. Hierbei bewirkt die Klimaanlage, dass ein in den Fahrzeuginnenraum zugeführter Luftstrom in Abhängigkeit von den jeweiligen Erfordernissen erwärmt oder abgekühlt oder auf einer aktuellen Temperatur gehalten wird. Zudem wird dem zugeführten Luftstrom Feuchtigkeit entzogen. Um das resultierende abgeschiedene Wasser bzw. in der Klimaanlage entstehendes Kondenswasser abzuführen, werden in der Regel Wasserablaufanordnungen eingesetzt, welche vorzugsweise einen Ablaufkanal aufweisen, welcher das Wasser durch einen Durchbruch im Rohbau, vorzugsweise im Bereich eines Fahrzeugbodens, aus dem Fahrzeug ableitet.

Aus der DE 10 2009 009 065 A1 ist eine Klimaanlage für ein Kraftfahrzeug bekannt, bei welcher eine Vielzahl von Funktionseinheiten in einem Luftströmungspfad angeordnet ist. Die Funktionseinheiten sind zumindest teilweise von jeweiligen Gehäusen umgeben, wobei die Vielzahl von Funktionseinheiten zumindest ein Gebläse, ein Filter und einen Verdampfer umfasst. Zumindest ein erstes Gehäuse ist mit einem Verbindungselement zum Ableiten von Kondenswasser und zum direkten dichten Verbinden des ersten Gehäuses über das Verbindungselement mit einem zweiten Gehäuse versehen.

Aus der DE 11 2014 006 214 T5 ist ein Klimaanlagensystem für Motorfahrzeuge bekannt, welches ein Klimaanlagengehäuse mit einem Drainageanschluss, einen Verdampfer, der innerhalb des Klimaanlagengehäuses angeordnet ist, und einen Drainageschlauch umfasst, der ausgebildet ist, um Kondenswasser, das in dem Verdampfer erzeugt wird, aus der Fahrgastzelle abzuführen. Der Drainageschlauch ist mit dem Drainageanschluss verbunden und wird aus der Fahrgastzelle durch ein Armaturenbrett herausgeführt. Zudem ist eine Verbindungseinrichtung ausgebildet, um auf rotierbare Weise den Drainageschlauch mit dem Drainageanschluss des Klimaanlagengehäuses zu verbinden, um eine Rotation des Drainageschlauchs in Bezug auf den Drainageanschluss zu ermöglichen, wenn der Drainageschlauch bei einem Montagevorgang des Drainageschlauchs verdreht wird.

Aus der DE 10 2019 207 800 A1 ist eine Kondenswasserablaufeinrichtung zur Abführung von Kondenswasser in einem Elektrofahrzeug bekannt, welche einen rohrförmigen Ablaufkanal umfasst, an dessen Eingang ein Verdampfergehäuseanschluss und an dessen Ausgang ein Ablaufstutzen angeordnet ist. Der Verdampfergehäuseanschluss und ein Filterdeckelanschluss münden in den Ablaufkanal. Der Verdampfergehäuseanschluss und der Filterdeckelanschluss sind im Einbauzustand oberhalb des Ablaufstutzens angeordnet.

Aus der FR 2 911 815 A1 ist ein Schallschutzsystem bekannt, welches zum Abführen von Kondensaten aus einer Kraftfahrzeugklimaanlage vorgesehen ist. Ein Kondensatablauf einer Klimaanlage ist im Wesentlichen ein Ablaufrohr, das den Hohlkörper des Klimaanlagengehäuses mit der Außenwelt verbindet und das Abführen von zunächst in der Luft enthaltenen und dann am Verdampfer kondensierten Dämpfen, hauptsächlich Wasserdämpfen, ermöglicht. Das Schallschutzsystem umfasst Wände, welche ein Labyrinth bilden, so dass in einem relativ kompakten Raum ein relativ langer Pfad für Schallwellen ausgebildet wird, welche von außen durch einen Kondensatauslass eindringen. Die Wände sind von einer Abdeckung bedeckt, deren Innenseite mit einem hydrophoben, schallabsorbierenden Material beschichtet ist.

Aus der CN 111824192 A ist eine direkte Abgas- und Entwässerungsstruktur eines Schienenverkehrsfahrzeugs bekannt. Die Abgas- und Entwässerungsstruktur umfasst einen Fahrzeugkarosserierahmen, Seitenwände, einen Fahrgastraumboden und eine Rohrleitung aus Metall. Die Rohrleitung ist mit einem Oberteil, einem Labyrinthabschnitt und einem Unterteil versehen. Das Oberteil ist zwischen dem Fahrzeugkarosserierahmen und der Seitenwand angeordnet. Das Unterteil durchdringt einen Bodenrahmen des Fahrzeugkarosserierahmens und erstreckt sich bis zu einer Position unterhalb der Fahrzeugkarosserie. Der Labyrinthabschnitt ist zwischen dem Fahrgastraumboden und dem Bodenrahmen des Fahrzeugkarosserierahmens angeordnet. Zudem ist die Rohrleitung von einem Wärmeisolationsmaterial umhüllt.

Der Erfindung liegt die Aufgabe zu Grunde, eine Wasserablaufanordnung für ein Fahrzeug bereitzustellen, welche eine einfache Wasserabscheidung durch einen Hohlprofil ermöglicht.

Diese Aufgabe wird durch eine Wasserablaufanordnung für ein Fahrzeug mit den Merkmalen des Patentanspruchs 1 gelöst. Vorteilhafte Ausgestaltungen mit zweckmäßigen Weiterbildungen der Erfindung sind in den abhängigen Patentansprüchen angegeben.

Um eine Wasserablaufanordnung für ein Fahrzeug bereitzustellen, welche eine einfache Wasserabscheidung durch ein Hohlprofil ermöglicht, umfasst die Wasserablaufanordnung für ein Fahrzeug einen Ablaufkanal, eine rohrförmige Durchführvorrichtung, welche durch zwei in gegenüberliegende Wandbleche eingebrachte Rohbauöffnungen eines Hohlprofils einer Fahrzeugkarosserie geführt ist, und eine rohbaufeste Hülse, welche eine erste der beiden Rohbauöffnungen des Hohlprofils durchgreift und fluiddicht mit dem Hohlprofil verbunden ist. Hierbei ist die Durchführvorrichtung fluiddicht in die rohbaufeste Hülse eingeführt und durchgreift diese mit einem Ablauf, welcher an einem eingeführten Ende der Durchführvorrichtung angeordnet ist. Der Ablaufkanal ist mit seinem freien Ende fluiddicht in eine Aufnahme der Durchführvorrichtung eingeführt und gehalten, welche an einem dem Ablauf gegenüberliegenden Ende der Durchführvorrichtung angeordnet ist. Hierbei ist an einer Außenwand der rohbaufesten Hülse ein umlaufender erster Dichtkragen ausgebildet, welcher mit einem korrespondierenden ersten Wandblech des Hohlprofils verbunden ist und als Abdeckscheibe wirkt, welche die erste Rohbauöffnung im ersten Wandblech dichtend abdeckt. Die rohbaufeste Hülse kann vorzugsweise als Metallhülse ausgeführt werden. Der erste Dichtkragen kann mit dem erste Wandblech beispielsweise verschweißt oder verklebt sein. Zudem ist an einer Außenwand der Aufnahme der Durchführvorrichtung ein umlaufender zweiter Dichtkragen ausgebildet, welcher auf einem korrespondierenden zweiten Wandblech des Hohlprofils aufliegt und als Abdeckscheibe wirkt, welche eine zweite Rohbauöffnung im zweiten Wandblech des Hohlprofils dichtend abdeckt. Durch das Schließen der Rohbauöffnung mit Hilfe des zweiten Dichtkragens, kann eine akustische Abdichtung des Hohlprofils erreicht werden.

Bei Ausführungsformen der erfindungsgemäßen Wasserablaufanordnung für ein Fahrzeug wird abgeschiedenes Wasser bzw. Kondenswasser mittels der Durchführvorrichtung durch das Hohlprofil geleitet, ohne dass dieses in das Hohlprofil eindringen kann. Zudem dichten Ausführungsformen der erfindungsgemäßen Wasserablaufanordnung für ein Fahrzeug das Fahrzeug auch gegen Wasser von unten ab, welches bei einer Wasserdurchfahrt durch den Ablauf der Durchführvorrichtung eindringen könnte. Die Durchführvorrichtung kann vorzugsweise aus einem Ethylen-Propylen-Dien-Monomer-Kautschuk (EPDM-Kautschuk) hergestellt sein. Bei dem Hohlprofil kann es sich beispielsweise um einen Querträger handeln, welcher im Bodenbereich des Fahrzeugs angeordnet ist.

Vorzugsweise kann zwischen dem ersten Dichtkragen und dem ersten Wandblech ein Dichtelement angeordnet sein. Das Dichtelement kann beispielsweise als Gummidichtscheibe oder als Gummibeschichtung ausgeführt sein. Da die bevorzugte Montagerichtung der Wasserablaufanordnung von oben ist, entspricht das erste Wandblechs des Hohlprofils vorzugsweise einem unteren Wandblech, welches einen äußeren Abschluss des Fahrzeugs ausbildet. Die Durchführvorrichtung kann dann in einem Arbeitsschritt von oben durch eine zweite Rohbauöffnung in einem zweiten oberen Wandblech, welches dem Fahrzeuginneren zugewandt ist, in die rohbaufeste Hülse eingeführt werden.

In weiterer vorteilhafter Ausgestaltung der Wasserablaufanordnung kann an einer Außenwand des Ablaufs mindestens eine Rückzugssicherung ausgebildet sein, welche im montierten Zustand auf dem ersten Dichtkragen der rohbaufesten Hülse aufliegt. Hierzu kann die mindestens eine Rückzugssicherung beispielsweise als elastische Rastnase ausgeführt sein. Vorzugsweise sind zwei Rastnasen einander gegenüberliegend an der Außenwand des Ablaufs angeordnet. Um die Elastizität beim Einführen der Durchführvorrichtung in die rohbaufeste Hülse zu erhalten, können längliche Aussparungen zwischen den Rastnasen in den Ablauf eingebracht sein.

In weiterer vorteilhafter Ausgestaltung der Wasserablaufanordnung kann zwischen der Aufnahme und dem Ablauf eine erste Dichtung an der Durchführvorrichtung angeordnet sein, welche dichtend mit der rohbaufesten Hülse zusammenwirken kann. Die erste Dichtung kann mindestens eine gummielastische Dichtlippe aufweisen, welche vorzugsweise an die Außenwand der Durchführvorrichtung angespritzt werden und dichtend an einer Innenwand der rohbaufesten Hülse anliegen kann. Um die Dichtwirkung zu erhöhen, kann die erste Dichtung vorzugsweise mehrere gummielastische Dichtlippen aufweisen.

In weiterer vorteilhafter Ausgestaltung der Wasserablaufanordnung kann am freien Ende der Aufnahme der Durchführvorrichtung ein Einführtrichter ausgebildet sein. Dadurch kann des Einführen und Zentrieren des Ablaufkanals in die Aufnahme der Durchführvorrichtung erleichtert werden. Zudem kann an einer Innenwand der Aufnahme der Durchführvorrichtung ein Anschlag ausgebildet sein, welcher die Einführtiefe des Ablaufkanals vorgibt. Durch den Anschlag erhält ein Arbeiter beim Einführen des Ablaufkanals in die Aufnahme Durchführvorrichtung eine haptische Rückmeldung, wenn die vorgegebene Einführtiefe für den Ablaufkanal erreicht ist. Der Anschlag kann beispielsweise dadurch umgesetzt werden, dass eine Durchgangsöffnung der Durchführvorrichtung gestuft mit unterschiedlichen Durchmessern ausgeführt sein kann. So können beispielsweise die Aufnahme und der Ablauf der Durchführvorrichtung jeweils einen größeren Innendurchmesser als ein Zwischenstück zwischen der Aufnahme und dem Ablauf aufweisen.

In weiterer vorteilhafter Ausgestaltung der Wasserablaufanordnung kann am freien Ende des Ablaufkanals eine zweite Dichtung angeordnet sein, welche dichtend mit der Aufnahme der Durchführvorrichtung zusammenwirken kann. Die zweite Dichtung kann mindestens eine gummielastische Dichtlippe aufweisen, welche vorzugsweise an die Außenwand der Ablaufkanals angespritzt werden und dichtend an der Innenwand der Aufnahme der Durchführvorrichtung anliegen kann. Um die Dichtwirkung zu erhöhen, kann die zweite Dichtung vorzugsweise mehrere gummielastische Dichtlippen aufweisen.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind.

Ein Ausführungsbeispiel der Erfindung ist in den Zeichnungen dargestellt und wird in der nachfolgenden Beschreibung näher erläutert. In den Zeichnungen bezeichnen gleiche Bezugszeichen Komponenten bzw. Elemente, die gleiche bzw. analoge Funktionen ausführen. Hierbei zeigen:
- Fig. 1: eine schematische und perspektivische Darstellung eines Aus-schnitts eines Fahrzeugbodens mit einem Ausführungsbeispiel einer erfindungsgemäßen Wasserablaufanordnung für ein Fahrzeug; und
- Fig. 2: eine schematische Schnittdarstellung der erfindungsgemäßen Wasserablaufanordnung für ein Fahrzeug aus Fig. 1.

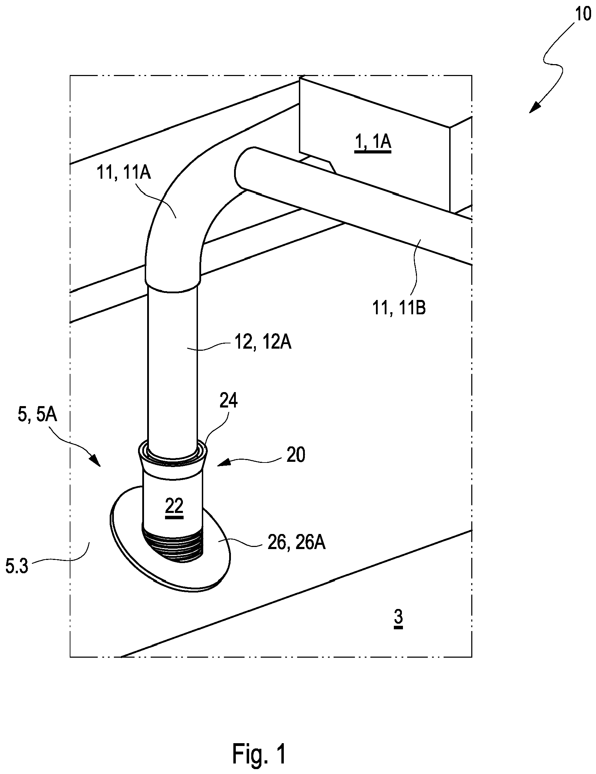

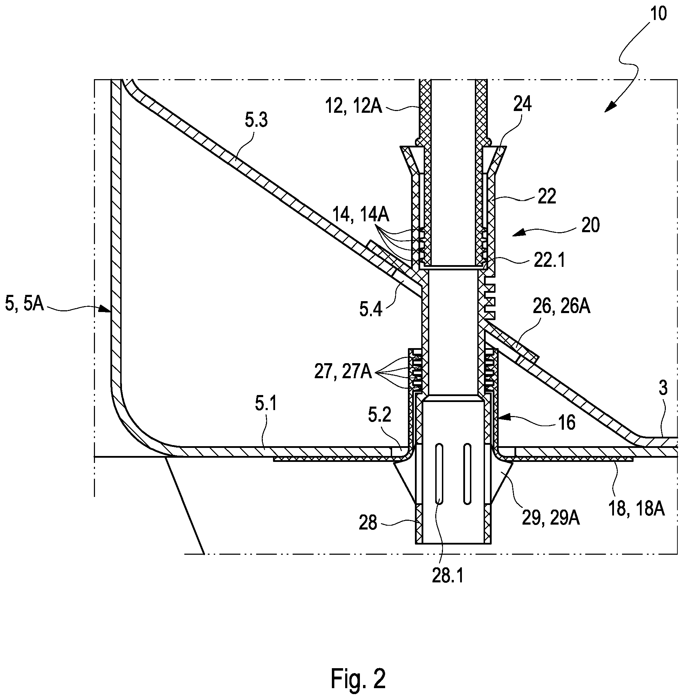

Wie aus Fig. 1 und 2 ersichtlich ist, umfasst das dargestellte Ausführungsbeispiel einer erfindungsgemäßen Wasserablaufanordnung 10 einen Ablaufkanal 12, eine rohrförmige Durchführvorrichtung 20, welche durch zwei in gegenüberliegende Wandbleche 5.1, 5.3 eingebrachte Rohbauöffnungen 5.2, 5.4 eines Hohlprofils 5 einer Fahrzeugkarosserie geführt ist, und eine rohbaufeste Hülse 16, welche eine erste der beiden Rohbauöffnungen 5.2, 5.4 des Hohlprofils 5 durchgreift und fluiddicht mit dem Hohlprofil 5 verbunden ist. Hierbei ist die Durchführvorrichtung 20 fluiddicht in die rohbaufeste Hülse 16 eingeführt und durchgreift diese mit einem Ablauf 28, welcher an einem eingeführten Ende der Durchführvorrichtung 20 angeordnet ist. Der Ablaufkanal 12 ist mit seinem freien Ende fluiddicht in eine Aufnahme 22 der Durchführvorrichtung 20 eingeführt und gehalten, welche an einem dem Ablauf 28 gegenüberliegenden Ende der Durchführvorrichtung 20 angeordnet ist.

Im dargestellten Ausführungsbeispiel wird die Wasserablaufanordnung 10 zum Ableiten von Kondenswasser eines Fahrzeugaggregats 1 eingesetzt, welches hier einer Klimaanlage 1A entspricht. Hierzu ist mindestens ein Zulaufkanal 11 mit dem Ablaufkanal 12 verbunden, um das Kondenswasser des Fahrzeugaggregats 1 abzuleiten. Wie aus Fig. 1 weiter ersichtlich ist werden im dargestellten Ausführungsbeispiel zwei Zulaufkanäle 11A, 11B zusammengeführt und mit dem Ablaufkanal 12 verbunden. Der Ablaufkanal 12 ist im dargestellten Ausführungsbeispiel als Schlauch 12A ausgeführt.

Wie aus Fig. 1 und 2 weiter ersichtlich ist, entspricht das dargestellte Hohlprofil 5 einem im Bereich eines Fahrzeugbodens 3 angeordnetem Querträger 5A. Daher entspricht ein erstes Wandblech 5.1 des Hohlprofils 5 im dargestellten Ausführungsbeispiel einem unteren Wandblech, welches einen äußeren Abschluss des Fahrzeugbodens 3 ausbildet. Das bedeutet, dass die rohbaufeste Hülse 16 in eine erste Öffnung 5.2 des ersten bzw. unteren Wandblechs 5.1 eingeführt ist und mit dem Hohlprofil 5 verbunden ist. Die rohrförmige Durchführvorrichtung 20 ist von oben durch eine zweite Rohbauöffnung 5.4 in einem zweiten Wandblech 5.3, welches hier einem dem Fahrzeuginneren zugewandten oberen Wandblech entspricht, in die rohbaufeste Hülse 16 so eingeführt, dass die Durchführvorrichtung 20 einen Hohlraum des Hohlprofils 5 vollständig überbrückt.

Wie aus Fig. 2 weiter ersichtlich ist, ist im dargestellten Ausführungsbeispiel der Wasserablaufanordnung 10 an einer Außenwand der rohbaufesten Hülse 16 ein umlaufender erster Dichtkragen 18 ausgebildet, welcher mit dem korrespondierenden ersten Wandblech 5.1 des Hohlprofils 5 verbunden ist und als Abdeckscheibe 18A wirkt, welche die erste Rohbauöffnung 5.2 im ersten Wandblech 5.1 dichtend abdeckt. Im dargestellten Ausführungsbeispiel weist der erste Dichtkragen 18 eine nicht näher bezeichnete Beschichtung als Dichtelement auf, welche dichtend am ersten Wandblech 5.1 des Hohlkörpers 5 anliegt. Der erste Dichtkragen 18 ist im dargestellten Ausführungsbeispiel außerhalb der Beschichtung mit dem ersten Wandblech 5.1 verschweißt.

In einem alternativen nicht dargestellten Ausführungsbeispiel ist der erste Dichtkragen 18 der rohbaufesten Hülse 16 mit dem ersten Wandblech 5.1 des Hohlkörpers 5 verklebt. Hierbei wirkt die Kleberschicht gleichzeitig als Dichtelement zwischen dem Dichtkragen 18 der rohbaufesten Hülse 16 und dem ersten Wandblech 5.1 des Hohlkörpers.

Wie aus Fig. 2 weiter ersichtlich ist, ist an einer Außenwand des Ablaufs 28 mindestens eine Rückzugssicherung 29 ausgebildet, welche im dargestellten montierten Zustand auf dem ersten Dichtkragen 18 der rohbaufesten Hülse 16 aufliegt. Im dargestellten Ausführungsbeispiel sind zwei als elastische Rastnasen 29A ausgeführte Rückzugssicherungen 29 einander gegenüberliegend an der Außenwand des Ablaufs 28 angeordnet. Um die Elastizität beim Einführen der Durchführvorrichtung 20 in die rohbaufeste Hülse 16 zu erhalten, sind zwischen den Rastnasen 29A längliche Aussparungen 28.1 in den Ablauf 28 eingebracht. Dadurch können die Rastnasen 29A beim Einführen des Ablaufs 28 in die rohbaufesten Hülse 16 nach innen gedrückt werden. Nach dem Durchtritt kehren die elastischen Rastnasen 29A in ihre Ausgangsposition zurück und liegen am ersten Dichtkragen 18 der rohbaufesten Hülse 16 an.

Wie aus Fig. 2 weiter ersichtlich ist, weist die rohrförmige Durchführvorrichtung 20 verschiedene Außendurchmesser und Innendurchmesser auf. So sind die Außendurchmesser und die Innendurchmesser der rohrförmigen Durchführungsvorrichtung 20 im Bereich der Aufnahme 22 und im Bereich des Ablaufs 28 größer als an einem Zwischenstück der Durchführvorrichtung 20 zwischen der Aufnahme 22 und dem Ablauf 28. Dadurch ergibt sich eine gestufte Durchgangsöffnung und eine Verjüngung im Bereich des Zwischenstücks. Zudem ist zwischen der Aufnahme 22 und dem Ablauf 28 eine erste Dichtung 27 an der Durchführvorrichtung 20 angeordnet, welche dichtend mit der rohbaufesten Hülse 16 zusammenwirkt. Im dargestellten Ausführungsbeispiel weist die erste Dichtung 27 vier an die Durchführvorrichtung 20 angespritzte gummielastische Dichtlippen 27A auf, welche dichtend an einer Innenwand der rohbaufesten Hülse 16 anliegen.

Wie aus Fig. 1 und 2 weiter ersichtlich ist, ist am freien Ende der Aufnahme 22 der Durchführvorrichtung 20 ein Einführtrichter 24 ausgebildet. Zudem ist an einer Innenwand der Aufnahme 22 der Durchführvorrichtung 20 ein Anschlag 22.1 ausgebildet, welcher die Einführtiefe des Ablaufkanals 12 vorgibt. Im dargestellten Ausführungsbeispiel ist der Anschlag 22.1 durch die Stufe in der Durchgangsöffnung der Durchführvorrichtung 20 realisiert.

Wie aus Fig. 1 und 2 weiter ersichtlich ist, ist an einer Außenwand der Aufnahme 22 der Durchführvorrichtung 20 ein umlaufender zweiter Dichtkragen 26 ausgebildet, welcher auf dem korrespondierenden zweiten Wandblech 5.3 des Hohlprofils 5 aufliegt und als Abdeckscheibe 26A wirkt, welche die zweite Rohbauöffnung 5.4 im zweiten Wandblech 5.3 des Hohlprofils 5 dichtend abdeckt. Da das Hohlprofil 5 im dargestellten Ausführungsbeispiel einen dreieckigen Querschnitt aufweist, ist der zweite Dichtkragen 26 mit einem entsprechenden Winkel schräg an die Außenwand der Aufnahme 22 der Durchführvorrichtung 20 angeformt.

Wie aus Fig. 1 weiter ersichtlich ist, ist am freien Ende des Ablaufkanals 12 eine zweite Dichtung 14 angeordnet, welche dichtend mit der Aufnahme 22 der Durchführvorrichtung 20 zusammenwirkt. Im dargestellten Ausführungsbeispiel weist die zweite Dichtung 14 vier an den Ablaufkanal 20 angespritzte gummielastische Dichtlippen 14A auf, welche dichtend an der Innenwand der Aufnahme 22 anliegen.

### BEZUGSZEICHENLISTE

- 1: Fahrzeugaggregat
- 1A: Klimaanlage
- 3: Fahrzeugboden
- 5: Hohlprofil
- 5A: Querträger
- 5.1: erstes (unteres) Wandblech
- 5.2: erste Rohbauöffnung
- 5.3: zweites (oberes) Wandblech
- 5.4: zweite Rohbauöffnung
- 10: Wasserablaufanordnung
- 11, 11A, 11B: Zulaufkanal
- 12: Ablaufkanal
- 12A: Schlauch
- 14: zweite Dichtung
- 14A: Dichtlippe
- 16: rohbaufeste Hülse
- 18: erster Dichtkragen
- 18A: Abdeckscheibe
- 20: Durchführvorrichtung
- 22: Aufnahme
- 22.1: Anschlag
- 24: Einführtrichter
- 26: zweiter Dichtkragen
- 26A: Abdeckscheibe
- 27: erste Dichtung
- 27A: Dichtlippe
- 28: Ablauf
- 28.1: Aussparung
- 29: Rückzugssicherung
- 29A: elastische Rastnase

## Patentansprüche

1. Wasserablaufanordnung (10) für ein Fahrzeug, insbesondere für Kondenswasser eines Fahrzeugaggregats (1), mit einem Ablaufkanal (12), einer rohrförmigen Durchführvorrichtung (20), welche durch zwei in gegenüberliegende Wandbleche (5.1, 5.3) eingebrachte Rohbauöffnungen (5.2, 5.4) eines Hohlprofils (5) einer Fahrzeugkarosserie geführt ist, und einer rohbaufesten Hülse (16), welche eine erste der beiden Rohbauöffnungen (5.2, 5.4) des Hohlprofils (5) durchgreift und fluiddicht mit dem Hohlprofil (5) verbunden ist, wobei die Durchführvorrichtung (20) fluiddicht in die rohbaufeste Hülse (16) eingeführt ist und diese mit einem Ablauf (28) durchgreift, welcher an einem eingeführten Ende der Durchführvorrichtung (20) angeordnet ist, wobei der Ablaufkanal (12) mit seinem freien Ende fluiddicht in eine Aufnahme (22) der Durchführvorrichtung (20) eingeführt und gehalten ist, welche an einem dem Ablauf (28) gegenüberliegenden Ende der Durchführvorrichtung (20) angeordnet ist, wobei an einer Außenwand der rohbaufesten Hülse (16) ein umlaufender erster Dichtkragen (18) ausgebildet ist, welcher mit einem korrespondierenden ersten Wandblech (5.1) des Hohlprofils (5) verbunden ist und als Abdeckscheibe (18A) wirkt, welche die erste Rohbauöffnung (5.2) im ersten Wandblech (5.1) dichtend abdeckt, und wobei an einer Außenwand der Aufnahme (22) der Durchführvorrichtung (20) ein umlaufender zweiter Dichtkragen (26) ausgebildet ist, welcher auf einem korrespondierenden zweiten Wandblech (5.3) des Hohlprofils (5) aufliegt und als Abdeckscheibe (26A) wirkt, welche eine zweite Rohbauöffnung (5.4) im zweiten Wandblech (5.3) des Hohlprofils (5) dichtend abdeckt.

2. Wasserablaufanordnung (10) nach Anspruch 1,
**dadurch gekennzeichnet,**
**dass** zwischen dem ersten Dichtkragen (18) und dem ersten Wandblech (5.1) ein Dichtelement angeordnet ist.

3. Wasserablaufanordnung (10) nach Anspruch 1 oder 2,
**dadurch gekennzeichnet,**
**dass** an einer Außenwand des Ablaufs (28) mindestens eine Rückzugssicherung (29) ausgebildet ist, welche im montierten Zustand auf dem ersten Dichtkragen (18) der rohbaufesten Hülse (16) aufliegt.

4. Wasserablaufanordnung (10) nach einem der Ansprüche 1 bis 3, **dadurch gekennzeichnet,**
**dass** zwischen der Aufnahme (22) und dem Ablauf (28) eine erste Dichtung (27) an der Durchführvorrichtung (20) angeordnet ist, welche dichtend mit der rohbaufesten Hülse (16) zusammenwirkt.

5. Wasserablaufanordnung (10) nach einem der Ansprüche 1 bis 4, **dadurch gekennzeichnet,**
**dass** am freien Ende der Aufnahme (22) der Durchführvorrichtung (20) ein Einführtrichter (24) ausgebildet ist.

6. Wasserablaufanordnung (10) nach einem der Ansprüche 1 bis 5, **dadurch gekennzeichnet,**
**dass** an einer Innenwand der Aufnahme (22) der Durchführvorrichtung (20) ein Anschlag (22.1) ausgebildet ist, welcher die Einführtiefe des Ablaufkanals (12) vorgibt.

7. Wasserablaufanordnung (10) nach einem der Ansprüche 1 bis 6, **dadurch gekennzeichnet,**
**dass** am freien Ende des Ablaufkanals (12) eine zweite Dichtung (14) angeordnet ist, welche dichtend mit der Aufnahme (22) der Durchführvorrichtung (20) zusammenwirkt.

8. Wasserablaufanordnung (10) nach Anspruch 4 oder 7,
**dadurch gekennzeichnet,**
**dass** die Dichtung (14, 27) mindestens eine gummielastische Dichtlippe (14A, 27A) aufweist.
